# EUROPÄISCHE PATENTSCHRIFT

(11) **EP 0 817 573 B1**
(45) Veröffentlichungstag und Bekanntmachung des Hinweises auf die Patenterteilung: **08.11.2000**
(21) Anmeldenummer: 96908079.5
(22) Anmeldetag: 20.03.1996
(51) Int. Cl.: A23L 1/32, A23L 1/015, C11B 11/00, C11B 3/00

(54) **VERFAHREN ZUR HERSTELLUNG EINES DIÄTETISCHEN, CHOLESTEROLREDUZIERTEN VOLLEI- ODER EIGELBPRODUKTES**
METHOD OF MANUFACTURING A DIETARY CHOLESTEROL-REDUCED WHOLE-EGG OR EGG-YOLK PRODUCT
PROCEDE DE FABRICATION D'UN PRODUIT DIETETIQUE A TENEUR REDUITE EN CHOLESTEROL A BASE D'OEUF OU DE JAUNE D'OEUF

(30) Priorität: 31.03.1995 DE 19511944
(43) Veröffentlichungstag der Anmeldung: 14.01.1998
(73) Patentinhaber: Jackeschky, Hans-Joachim, 22929 Hammoor (DE)
(72) Erfinder: Jackeschky, Hans-Joachim, 22929 Hammoor (DE)
(74) Vertreter: Emmel, Thomas, Dipl.-Biol., Dr.
(86) Internationale Anmeldenummer: EP9601192
(87) Internationale Veröffentlichungsnummer: WO9629892

(56) Entgegenhaltungen:
- WO-A-93/14649
- WO-A-93/16607
- GB-A- 2 270 925
- DATABASE WPI Week 9128 Derwent Publications Ltd., London, GB; AN 91-206193 XP002003061 & SU,A,1 587 452 (MOSCOW MENDELEEV CHEM IN) , 23.August 1990

## Beschreibung

Die Erfindung bezieht sich auf ein Verfahren zur Herstellung eines cholesterolreduzierten, diätetischen Vollei- oder Eigelbproduktes. Weiterhin richtet sich die Erfindung auch auf ein in diesem Verfahren als Nebenprodukt anfallendes cholesterolangereichertes Gemisch sowie auf dessen Verwendung bei der Herstellung von umweltverträglichen Lacken.

Ein gattungsgemäßes Verfahren zur Herstellung eines diätetischen cholesterolreduzierten Vollei- oder Eigelbproduktes ist aus der WO 93/14649 bekannt geworden. Bei dem bekannten Verfahren wird das Ausgangseiprodukt zunächst getrocknet und die getrocknete Eimasse dann mit einem Behandlungsmittel auf Basis eines pflanzlichen Speiseöles extrahiert. Zur Extraktion suspendiert man die Eimasse in dem Behandlungsmittel, läßt die Suspension über eine definierte Einwirkzeit stehen und entfernt dann in einem Entölungsschritt den Volumenanteil des eingesetzten Behandlungsmittels aus der Suspension. Während der Einwirkzeit verteilt sich die Lipidfraktion des Ausgangseiproduktes gleichmäßig in dem ebenfalls lipophilen Behandlungsmittel. Das in dem Entölungsschritt entfernte Behandlungsmittel enthält damit einen wesentlichen Anteil der Lipidkomponenten des Ausgangseiproduktes, darunter insbesondere das Eigelbcholesterol. Wiederholt man den Extraktionsschritt mehrere Male, so kann man die Lipidfraktion des Ausgangseiproduktes vollständig durch das z.B. als Behandlungsmittel eingesetzte pflanzliche Speiseöl ersetzen. Man erhält so ein garantiert cholesterolreduziertes Produkt, das keinerlei lebensrechtlich bedenkliche Komponenten enthält.

Das gattungsgemäße Verfahren benötigt eine relativ große Menge an Behandlungsmittel. Um die Verfahrensdauer einigermaßen im Rahmen zu halten, ist es außerdem erforderlich, daß der Entölungsschritt mittels Zentrifugation durchgeführt wird. Auf diese Weise ist zwar eine schnelle Entfernung des Behandlungsmittels möglich. Andererseits sind Zentrifugen äußerst störanfällig und in Anschaffung und Unterhaltung kostenaufwendig.

Aufgabe der Erfindung ist es daher, ein Verfahren zu schaffen, das die Herstellung eines cholesterolreduzierten, diätetischen Vollei- oder Eigelbproduktes unter minimalem Material- und Zeiteinsatz ermöglicht.

Gelöst wird diese Aufgabe mit einem Verfahren, das die kennzeichnenden Merkmale des Anspruches 1 aufweist.

Danach ist vorgesehen, daß, wie bei dem gattungsgemäßen Verfahren, zunächst das Ausgangseiprodukt getrocknet wird. Im Unterschied zu dem bekannten Verfahren wird nun jedoch keine Suspension aus dem getrockneten Ausgangseiprodukt und dem zur Behandlung eingesetzten flüssigen cholesterolreduzierten Mittel hergestellt. Das Behandlungsmittel wird vielmehr in einer geeigneten Vorrichtung bei vorgegebenen Druck- und Temperaturbedingungen durch das getrocknete Ausgangseiprodukt hindurchgepreßt. Das getrocknete Ausgangseiprodukt kann dabei in Pulverform aber auch in einer mit Dosierpumpen förderbaren Form bereitgestellt werden. Im letztgenannten Fall kann das flüssige Trägermedium ein beliebiges organisches, auch cholesterinhaltiges, Lebensmittel sein, da es im Rahmen des erfindungsgemäßen Verfahrens nahezu rückstandsfrei wieder aus dem Ausgangseiprodukt entfernt werden kann.

Im Gegensatz zu dem gattungsgemäßen Verfahren erfolgt damit die Entfernung der Lipidfraktion aus dem Ausgangseiprodukt nicht mehr mittels Extraktion, sondern vielmehr durch Verdrängung. Das Funktionieren der Verdrängung ist relativ einfach zu erklären. Durch Trocknen des Ausgangseiproduktes bricht man die im flüssigen Ei vorliegende Öl in Wasser Emulsion auf schonende Weise. Man erhält dabei ein Eipulver mit Körnern, die einen festen Kern aus getrocknetem Protein aufweisen, der außen von einer Lipidhülle umgeben ist. Die Lipidhülle kommt dadurch zustande, daß die lipophilen Bestandteile des Ausgangseiproduktes durch den mit der Eintrocknung verbundenen Schrumpfungsvorgang an die Oberfläche des Körner gedrückt werden. Die Lipidhülle, die zunächst aus der Lipidfraktion des Ausgangseiproduktes besteht, kann durch das flüssige, ebenfalls lipidhaltige Behandlungsmittel relativ leicht von dem Proteinkern der Körner verdrängt und dann in gewünschtem (einstellbarem) Maße durch eine Lipidhülle auf Basis des Behandlungsmittels ersetzt werden.

In geeigneten durchsichtigen Vorrichtungen läßt sich die Verdrängung der Lipidfraktion des Ausgangseiproduktes relativ gut verfolgen. Es ist nämlich so, daß die Lipidfraktion des Ausgangseiproduktes aufgrund der darin enthaltenen Karotinoide einen gelblich, restlichen Ton hat. Nimmt man zur Verdrängung ein farbloses Behandlungsmittel, so kann man während des Hindurchpressens den sich durch die Eimasse hindurchbewegenden, farblich kontrastierenden Frontbereich gut verfolgen.

Das erfindungsgemäße Verfahren bietet eine ganze Reihe von Vorteilen. Ein wesentlicher Vorteil ist, daß ein im Vergleich zu dem gattungsgemäßen Verfahren deutlich geringere Menge an flüssigem cholesterolarmen Behandlungsmittel eingesetzt werden muß. Zur Verdrängung der Lipidfraktion aus dem getrockneten Ausgangseiprodukt reicht bereits eine Menge an Behandlungsmittel aus, die in etwa der Menge an getrocknetem Ausgangseiprodukt entspricht. Für eine maximale Verdrängung muß man etwa die doppelte Menge an Behandlungsmittel einsetzen. Im Gegensatz dazu benötigt das gattungsgemäße Verfahren eine im Vergleich zu dem Ausgangseiprodukt vielfache Menge an Behandlungsmittel.

Ein weiterer Vorteil ist, daß sich bei dem erfindungsgemäßen Verfahren in einem Arbeitsschritt eine hohe Verdrängungsrate der Eilipidfraktion erzielen läßt. Je nach Steuerung des Verfahrens kann man erreichen, daß über 95 % des im Ausgangseiprodukt enthaltenen Lipids entfernt und gegebenenfalls durch das Behandlungsmittel ersetzt werden. Man kann also in einem Arbeitsschritt über 95 % des im Ausgangseiprodukt enthaltenen Cholesterol entfernen. Beim gattungsgemäßen Verfahren sind hierfür mehrere nacheinandergeschaltete Extraktionsschritte erforderlich.

Schließlich ist ein weiterer Vorteil, daß das erfindungsgemäße Erfahren nur sehr geringe Anlageninveslitionen erfordert. Die Bereitstellung von Zentrifugen ist nicht mehr erforderlich. Das Verfahren kann vorteilhafterweise z.B. in einer Filterpresse durchgeführt werden, wobei sich die Chargenzeit im Vergleich zu dem gattungsgemäßen Verfahren auf ca. 1/4 reduziert. Zusammengefaßt arbeitet das erfindungsgemäße Verfahren unter deutlich reduzierten Kosten mit sehr hoher Produktivität.

Weitere Vorteile bestehen darin, daß sich durch Vorgabe der Druck- und Temperaturbedingungen der Lipidgehalt des nach der Behandlung erhaltenen Eiproduktes exakt einstellen läßt. Es ist z.B. möglich, das cholesterolreduzierte Endprodukt auf den Lipidgehalt des Ausgangseiproduktes einzustellen. Genausogut ist es aber auch möglich, durch längere Behandlungsdauer (längeres Pressen) den Lipidgehalt in dem cholesterolreduzierten Endprodukt auf einen niedrigeren Wert einzustellen.

Ein letzter Vorteil dieser nicht abschließenden Aufzählung besteht schließlich darin, daß bei dem gattungsgemäßen Verfahren optimale Ergebnisse nur dann erzielt werden, wenn das Ausgangseiprodukt auf eine definierte Korngröße getrocknet wird. Eine sorgfältige Steuerung des z.B. Sprühtrocknungsprozesses ist daher erforderlich. Bei dem erfindungsgemäßen Verfahren fällt dieses Erfordernis weg. Hier können ohne weiteres getrocknete Ausgangseiprodukte mit in sich unterschiedlichen Korngrößen bzw. Korngrößen, die von Charge zu Charge schwanken, behandelt werden. Es lediglich erforderlich, die Druck- bzw. Temperaturbedingungen dementsprechend anzupassen.

Vorteilhafte Ausgestaltungen des Verfahrens betreffen die Unteransprüche 2-6.

Theoretisch kann das Verfahren mit jeder Einrichtung durchgeführt werden, in der ein druck- und temperaturkontrolliertes Durchpressen des Behandlungsmittels durch das getrocknete Ausgangseiprodukt möglich ist. Besonders geeignet sind in diesem Zusammenhang gemäß Anspruch 2 Filterpressen, insbesondere die weiter unten noch näher erläuterten Membranfilterpressen. Typische Membranfilterpressen enthalten eine Kammer, deren Boden als Filter ausgestaltet ist. Auf diesen Filter wird mit vorgegebener Schichtdicke das getrocknete Ausgangseiprodukt angeordnet und anschließend mit dem Behandlungsmittel überschichtet. Mittels einer in der Kammer beweglich angeordneten Membran wird das Behandlungsmittel dann in die Schicht aus getrocknetem Ausgangseiprodukt gedrückt, wobei die darin enthaltene Lipidfraktion auf der druckabgewandten Seite durch den Filter verdrängt wird und in ein Auffanggefäß austritt.

Gemäß Anspruch 3 ist vorteilhaft vorgesehen, daß der Druck, mit der das Behandlungsmittel in das getrocknete Ausgangseiprodukt hineingepreßt wird, 50 bar nicht übersteigt. Wird das erfindungsgemäße Verfahren bei Drücken bis 5() bar durchgeführt, so lassen sich irreversible Proteinschädigungen des Eiproduktes sicher vermeiden. Die Einstellung des geeigneten Peßdruckes ist in erster Linie von der Korngröße des getrockneten Ausgangseiproduktes abhängig. Bei kleinen Korngrößen (das getrocknete Ausgangseiprodukt fällt feiner und damit dichter) müssen höhere Drücke angewendet werden als bei groberer Körnung. Die optimale Einstellung des geeigneten Preßdruckes in Abhängigkeit von der Korngröße stellt für den Fachmann jedoch keinerlei Problem dar.

Geeignete Temperaturen, bei denen das Verfahren optimal durchgeführt werden kann, liegen gemäß Anspruch 4 in einem Bereich zwischen 20° und 50° C. In diesem Temperaturbereich lassen sich Schädigungen der Proteine (z.B. durch Denaturierung) sicher vermeiden.

Bei dem erfindungsgemäßen Verfahren wird die ursprüngliche Lipidfraktion des Ausgangseiproduktes verdrängt und kann ganz oder teilweise durch das Behandlungsmittel ersetzt werden. Es versteht sich, daß man durch Auswahl des Behandlungsmittels dem erzielten Endprodukt einen speziellen Charakter geben kann. So ist es z.B. möglich, als Behandlungsmittel pflanzliche Speiseöle bzw. ein Gemisch mehrerer pflanzlicher Speiseöle einzusetzen. Pflanzliche Speiseöle sind in diätetischer Hinsicht besonders wertvoll. Besonders vorteilhaft ist, wenn man mit einem Gemisch von pflanzlichen Speiseölen arbeitet, von denen eines naturbelassenes rotes Palmöl ist. Rotes Palmöl ist ein ausgezeichnetes Antioxydationsmittel und gewährleistet, daß das erfindungsgemäß hergestellte Eiprodukt lagerstabil ist und nicht vorzeitig ranzig wird.

Es ist natürlich auch möglich, die aus dem Ausgangseiprodukt verdrängte Lipidfraktion aufzufangen, das enthaltende Cholesterin mit bekannten Verfahren zu entfernen und dann wieder in die Eimasse hineinzupressen. Auf diese Weise erhält man ein Eiprodukt, das mit Ausnahme des Cholesterolgehaltes, eine identische Zusammensetzung wie das Ausgangseiprodukt aufweist.

Selbstverständlich kann man das erhaltene Endprodukt auch in bezug auf den Lipidgehalt variierend einstellen. Wie oben bereits ausgeführt, ist es möglich, ein Endprodukt mit dem Lipidgehalt des Ausgangsproduktes bereitzustellen. Es ist aber auch möglich, durch entsprechende Verfahrenssteuerung Produkte mit geringerem Lipidgehalt herzustellen.

Die Erfindung bezieht sich nicht nur auf ein Verfahren zur Herstellung von cholesterolreduzierten Vollei- oder Eigelbprodukten. Sie richtet sich vielmehr auch noch auf ein bei diesem Verfahren als Filtrat erhältliches Gemisch aus Eilipiden und Behandlungsmittel. Zu Beginn des Verfahrens enthält das Gemisch fast ausschließlich die Lipidfraktion des Ausgangseiproduktes, die dann im Verlaufe der weiteren Pressung zunehmend durch das Behandlungsmittel verdünnt wird. Fängt man das Gemisch fraktionsweise auf, so weisen die Fraktionen zu Beginn des Verfahrens einen hohen Cholesterolgehalt auf, der im Verlaufe des weiteren Verfahrens abnimmt.

Es hat sich nun herausgestellt, daß ein Gemisch mit einem Cholesterolgehalt über 1 % auf vielerlei Weise sinnvoll genutzt werden kann. Ein weiterer unabhängiger Anspruch richtet sich daher auf das nach der Behandlung erhaltene Gemisch aus der Lipidfraktion des Ausgangseiproduktes und dem Behandlungsmittel, die einen Cholesterolgehalt von mehr als 1 % enthalten.

Derartige Gemische können z.B. bei der Herstellung von Steoriden im pharmazeutischen Bereich eingesetzt werden. Außerdem verfügen sie über hervorragende Eigenschaften als Emulgator. Auf Basis eines derartigen Filtrates lassen sich weiterhin ökologisch unbedenkliche Lackfarben, insbesondere Acrylharzlacke, herstellen. Die Aufzählung ist nicht abschließend. Grundsätzlich können die erfindungsgemäßen Filtrate im technischen, pharmazeutischen und auch im Lebensmittelbereich in vielfältiger Weise eingesetzt werden.

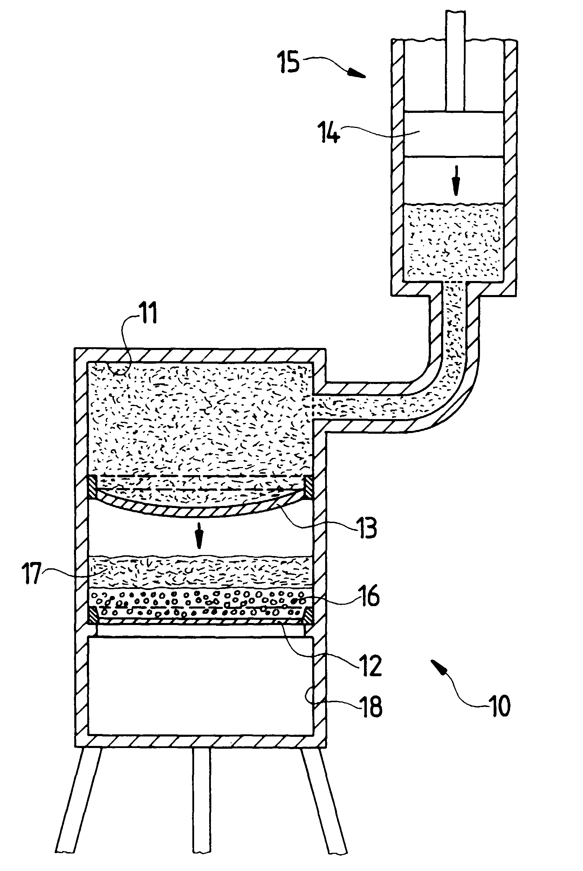

Im folgenden soll das erfindungsgemäße Verfahren an Hand eines Beispieles und einer Figur näher erläutert werden. Die Figur zeigt rein schematisch den Aufbau einer Membranfilterpresse, die in dem erfindungsgemäßen Verfahren eingesetzt werden kann.

### Beispiel

700 g Eigelbpulver werden trocken in eine Membranfilterpresse eingefüllt., die z.B. den in der nachfolgend besprochenen Figur gezeigten Aufbau haben kann. Das Eigelbpulver wird mit 1550 g 40°-warmem Waschöl überschichtet. Es kann sich dabei z.B. um Sonnenblumenöl handeln. Dann baut man innerhalb der Membranfilterpresse den Druck über einen Zeitraum von 10 Min. auf 5 bar auf und preßt dann mit 15 bar nach. Die Preßdauer beträgt insgesamt 15 Min.

Nach dem Pressen erhält man einen Eigelbkuchen mit einer Schichtdicke von ca. 10 mm, dessen Gewicht 682 g beträgt. Der Lipidgehalt beträgt 62,5 % sowohl in dem Ausgangseipulver als auch in dem erhaltenen Eigelbkuchen. Der Cholesterolgehalt hat sich demgegenüber von 2,35 % auf 0,09 % erniedrigt. Der Gehalt an Phytosterinen ist von 0 % auf 0,16 % angestiegen (was auf das zur Behandlung eingesetzte Pflanzenöl zurückzuführen ist). Der Lecithingehalt beträgt unverändert 18,5 % in dem Ausgangseiprodukt und dem in dem nach der Behandlung erhaltenen Eigelbkuchen. Man erhält also in einem Arbeitsgang, der nicht länger als 20 Min. dauert, ein Eigelbprodukt, dessen Cholesteringehalt deutlich reduziert ist. Das Verfahren ist so schonend, daß der in ernährungsphysiologischer Hinsicht wichtige Lecithingehalt nicht beeinträchtigt wird.

Wie oben bereits ausgeführt, ist das erfindungsgemäße Verfahren nicht nur interessant im Hinblick auf das dadurch herstellbare cholesterolreduzierte Eiprodukt. Vielmehr ist auch das im Verfahren erhaltene Filtrat von Interesse. Im beschriebenen Verfahren wurde das Filtrat in drei Fraktionen aufgefangen. Die erste Fraktion wog 499 g, hatte einen Steringesamtgehalt von 1,9 % (davon Cholesterol 1,69 % und Phytosterine 0,16 %). Die zweite Ölfraktion wog 422 g und hatte einen Steringesamtgehalt von 1,19 % (davon Cholesterol 0,89 % und Phytosterine 0,20 %). Die dritte Fraktion wog 606 g und hatte einen Steringesamtgehalt von 0,5 % (davon 0,28 % Cholesterol und 0,22 % Phytosterin). Zumindest die erste Fraktion kann in der oben beschriebenen, besonders vorteilhaften Weise zur Herstellung einer Vielzahl von technischen und pharmazeutischen Produkten eingesetzt werden.

Abschließend soll noch auf die Figur eingegangen werden. Hier ist rein schematisch der Aufbau einer Membranfilterpresse 10 dargestellt. Die Presse 10 enthält eine Kammer 11, die in ihrem Bodenbereich mit einem Filter 12 versehen ist. In der Kammer 11 ist vertikal verschiebbar eine Membran 13 angeordnet (die überdies in sich elastisch ist). Die Oberseite der Membran 13 steht in Flüssigkeitsverbindung mit einem Kolben 14 einer Pumpe 15. Wird der Kolben 14 in Pfeilrichtung abgesenkt, so bewegt sich die Membran 13 in der Kammer 11 ebenfalls in Pfeilrichtung. Auf den Filter 12 ist ein beliebiges Ausgangseiprodukt 16 angeordnet, das mit einer definierten Menge an Behandlungsmittel 17 überschichtet ist. Es kann bei dem Behandlungsmittel z.B. um ein Gemisch von pflanzlichen Speiseölen handeln.

Durch Absenken des Kolbens 14 wird in der Kammer 11 unterhalb der Membran 13 ein Druck aufgebaut, der das Behandlungsmittel 17 zunächst in das Ausgangseiprodukt 16 preßt und dabei die dessen Lipidfraktion durch den Filter 12 in einen Auffangbehälter 18 verdrängt. In dem Auffangbehälter 18 können Einrichtungen zum fraktionierten Auffangen vorgesehen sein.

Eine derartige Membranfilterpresse ist in der Anschaffung und Unterhaltung relativ kostengünstig. Außerdem erfordert ihr Betrieb kaum technische Vorkenntnisse.

## Patentansprüche

1. Verfahren zur Herstellung eines diätetischen, cholesterolreduzierten Vollei- oder Eigelbproduktes, bei dem das als Ausgangsprodukt dienende Vollei oder Eigelb getrocknet und aus dem getrocknetem Vollei oder Eigelb durch Behandlung mit einem cholesterolarmen, flüssigen Behandlungsmittel auf Basis eines für die menschliche Ernährung geeigneten Lipides die Lipidfraktion entfernt und zumindest partiell durch das Behandlungsmittel ersetzt wird, **dadurch gekennzeichnet,** daß das das Behandlungsmittel unter vorgegebenen Druck- und Temperaturbedingungen durch das getrocknete Vollei oder Eigelb hindurchgepreßt wird.

2. Verfahren nach Anspruch 1, **dadurch gekennzeichnet**, daß eine Filterpresse, insbesondere eine Membranfilterpresse (10), eingesetzt wird.

3. Verfahren nach einem der Ansprüche 1 oder 2, **dadurch gekennzeichnet**, daß ein Druck unterhalb von 50 bar gewählt wird.

4. Verfahren nach einem der Ansprüche 1 bis 3, **dadurch gekennzeichnet**, daß die Temperatur auf einen Bereich zwischen 20° und 50° C eingestellt wird.

5. Verfahren nach einem der Ansprüche 1 bis 4, **dadurch gekennzeichnet**, daß als Behandlungsmittel ein pflanzliches Speiseöl oder ein Gemisch aus pflanzlichen Speiseölen eingesetzt wird.

6. Verfahren nach Anspruch 5, **dadurch gekennzeichnet,** daß das als Behandlungsmittel eingesetzte Gemisch von pflanzlichen Speiseölen rotes Palmöl enthält.

7. Verfahren nach einem der Ansprüche 1 bis 6, **dadurch gekennzeichnet**, daß die Lipidfraktion des als Ausgangsprodukt eingesetzten Vollei oder Eigelbs vollständig durch das Behandlungsmittel ersetzt wird.

8. Gemisch aus der Lipidfraktion von Vollei oder Eigelb und dem Behandlungsmittel das in dem Verfahren nach den Ansprüchen 1 bis 7 erhältlich ist, **dadurch gekennzeichnet**, daß das Gemisch einen Cholesterolgehalt von mehr als 1 % aufweist.

9. Verwendung des Gemisches nach Anspruch 8 zur Herstellung von umweltverträglichen Lacken, insbesondere Acrylharzlakken.

## Claims

1. Method of manufacturing a dietetic, cholesterol-reduced whole egg or egg yolk product in which the whole egg or egg yolk constituting the starting product is dried and the lipid fraction is removed by treatment with a low-cholesterol, liquid treatment agent based on a lipid suitable for human nutrition and is at least partially replaced by the treatment agent, characterised in that the treatment agent is pressed through the dried whole egg or egg yolk under predetermined pressure and temperature conditions.

2. Method as claimed in Claim 1, characterised in that a filter press, particularly a membrane filter press (10), is used.

3. Method as claimed in one of Claims 1 to 2, characterised in that a pressure below 50 bar is selected.

4. Method as claimed in one of Claims 1 to 2, characterised in that the temperature is set to a range between 20 and 50 C.

5. Method as claimed in one of the Claims 1 to 4, characterised in that a vegetable food oil or a mixture of vegetable food oils is used as the treatment agent.

6. Method as claimed in Claim 5, characterised in that the mixture of vegetable food oils used as the treatment agent contains red palm oil.

7. Method as claimed in one of Claims 1 to 6, characterised in that the lipid fraction of the whole egg or egg yolk used as the starting product is completely replaced by the treatment agent.

8. Mixture of the lipid fraction from whole egg or egg yolk and the treatment agent, which may be obtained in the method as claimed in Claims 1 to 7, characterised in that mixture has a cholesterol content of more than 1 %.

9. Use of mixture as claimed in Claim 8 for manufacturing environmentally compatible lacquers, particularly acrylic resin lacquers.

## Revendications

1. Procédé de fabrication à base d'oeuf complet ou de jaune d'oeuf d'un produit diététique à teneur en cholestérol réduite dans le cadre duquel l'oeuf complet ou le jaune d'oeuf servant de produit de départ est séché et la fraction lipidique éliminée de l'oeuf complet ou du jaune d'oeuf séché par un traitement par un agent de traitement liquide pauvre en cholestérol à base d'un lipide approprié à l'alimentation humaine, cette fraction lipidique étant partiellement au moins remplacée par l'agent de traitement, **caractérisé en ce que** l'agent de traitement est pressé à travers l'oeuf complet ou le jaune d'oeuf séché dans des conditions définies de pression et de température.

2. Procédé selon la revendication 1, **caractérisé en ce qu**'est mis en oeuvre un filtre-presse, en particulier une presse (10) à filtre à diaphragme.

3. Procédé selon les revendications 1 ou 2, **caractérisé en ce que** la pression choisie est inférieure à 50 bars.

4. Procédé selon l'une des revendications 1 à 3, **caractérisé en ce que** la température est réglée sur une valeur comprise entre 20°C et 50°C.

5. Procédé selon l'une des revendications 1 à 4, **caractérisé en ce que** l'agent de traitement mis en oeuvre est une huile comestible végétale ou un mélange d'huiles comestibles végétales.

6. Procédé selon la revendication 5, **caractérisé en ce que** le mélange d'huiles comestibles végétales mis en oeuvre contient de l'huile de palme rouge.

7. Procédé selon l'une des revendications 1 à 6, **caractérisé en ce que** la fraction lipidique de l'oeuf complet ou du jaune d'oeuf séché servant de produit de départ est entièrement remplacée par l'agent de traitement.

8. Mélange constitué par la fraction lipidique de l'oeuf complet ou du jaune d'oeuf et par l'agent de traitement et obtenu dans le cadre du procédé selon les revendications 1 à 7, **caractérisé en ce que** le mélange a une teneur en cholestérol supérieure à 1 %.

9. Utilisation du mélange selon la revendication 8 pour la fabrication de peintures laquées écologiques, notamment de peintures laquées à base de résine acrylique.
